Europäisches Patentamt

European Patent Office

Office européen des brevets

(19)

(11) Veröffentlichungsnummer: **0 181 532**
**B1**

(12) **EUROPÄISCHE PATENTSCHRIFT**

(45) Veröffentlichungstag der Patentschrift: **09.05.90**

(51) Int. Cl.⁵: **G 02 B 6/42**

(21) Anmeldenummer: **85113345.4**

(22) Anmeldetag: **21.10.85**

(54) Verfahren zum Verbinden von Elementen der optischen Nachrichtentechnik miteinander oder mit Elementen von lösbaren Steckverbindungen.

(30) Priorität: **24.10.84 DE 3438940**

(43) Veröffentlichungstag der Anmeldung:
**21.05.86 Patentblatt 86/21**

(45) Bekanntmachung des Hinweises auf die Patenterteilung:
**09.05.90 Patentblatt 90/19**

(84) Benannte Vertragsstaaten:
**AT BE CH DE FR GB IT LI NL SE**

(56) Entgegenhaltungen:
**EP-A-0 091 738**
**DE-A-2 704 140**
**US-A-4 030 811**

**PATENT ABSTRACTS OF JAPAN, Band 6, Nr. 212, 26. Oktober 1982; JP-A-57-118 212**

(73) Patentinhaber: **Siemens Aktiengesellschaft**
**Wittelsbacherplatz 2**
**D-8000 München 2 (DE)**

(72) Erfinder: **Krause, Dieter**
**Pelheimerstrasse 7**
**D-8081 Oberschwalben (DE)**

Courier Press, Leamington Spa, England.

**Beschreibung**

Die Erfindung betrifft ein Verfahren zum Verbinden von Elementen der optischen Nachrichtentechnik miteinander oder mit Elementen von lösbaren Steckverbindungen nach dem Oberbegriff des Anspruchs 1.

Bei der Herstellung von optischen Sendermodulen muß zwischen einer Laserdiode und der einem Lichtwellenleiter zugeordneten Einkoppeloptik eine gewünschte Koppelposition hergestellt werden, die eine optimale Übertragung des von der Laserdiode ausgesandten Lichts in den Lichtwellenleiter gewährleistet. Auch bei der Herstellung von Steckerteilen für lösbare Steckverbindungen von Lichtwellenleitern muß zwischen einem Steckzylinder und einer Lichtleitfaser eine Koppelposition hergestellt werden, welche gewährleistet, daß der Kern der Lichtleitfaser genau zentrisch zum Außenumfang des Steckzylinders ausgerichtet ist und somit bei der fertigen Steckverbindung nur minimale Kopplungsverluste auftreten. In beiden Fällen erfordert das Einstellen der gewünschten Koppelposition Maßgenauigkeiten, welche im Submikrometerbereich liegen, wobei die einjustierte Koppelposition während der Verbindung der jeweiligen Elemente und danach lagestabil bleiben muß. Zusätzlich wird von der fixierten Koppelposition eine Zeitstabilität mit Richtwerten im Bereich von $10^5$ Stunden und eine Klimabeständigkeit verlangt, deren Richtwerte mit 70% relativer Feuchte bei einer Temperatur von 40°C und mit Temperaturwechseln zwischen -25°C und 75°C angegeben werden können. Zur Fixierung der Koppelposition bzw. zur Verbindung der jeweiligen Elemente in der Koppelposition werden Klebeverfahren und Lötverfahren eingesetzt, mit welchen die gestellten Anforderungen aber nur bedingt erfüllt werden können. So haben Klebstoffe den Nachteil, daß sie stark schrumpfen, große Wärmeausdehnungskoeffizienten aufweisen und außerdem auf Feuchtigkeit und Wärme sehr empfindlich reagieren. Lötverbindungen, die zu einer hohen Wärmebelastung der zu verbindenden Elemente führen, neigen außerdem unter mechanischen Spannungen leicht zum Kriechen.

Aus der DE-A-2 704 140 ist ein Verfahren zur Herstellung von Steckerteilen für lösbare Steckverbindungen von Lichtwellenleitern bekannt, bei welchem die Lichtleitfasern zunächst in einer zentrischen Bohrung eines hohlzylindrischen Justierkörpers befestigt werden. Dieser Justierkörper ist mit einem ebenfalls zylindrischen Bund versehen, dessen rückwärtige Kreisringfläche eine gegenüber dem stirnseitigen Ende der Lichtleitfaser zurückgesetzte Koppelfläche bildet. Dieser Koppelfläche ist eine zweite Koppelfläche zugeordnet, welche durch eine Stirnseite eines hohlzylindrisch ausgebildeten Steckzylinders gebildet wird. Der Justierkörper wird dann derart in den Steckzylinder eingesetzt, daß die beiden Koppelflächen aneinander anliegen und beide Teile relativ zueinander verschoben werden können, bis die gewünschte Justierposition erreicht ist, in welcher der Kern der Lichtleitfaser genau zentrisch zum Außenumfang des Steckzylinders ausgerichtet ist. Nach Erreichen dieser Justierposition wird dann der Justierkörper im Steckzylinder fixiert, wobei dieses Fixieren beispielsweise durch Kleben, Löten oder Schweißen vorgenommen werden soll. Zur Fertigstellung einer kompletten Steckverbindung werden dann zwei derart hergestellte Steckerteile in eine gemeinsame Hülse eingesetzt und aneinandergedrückt, bis die Stirnseiten der Lichtleitfasern aneinander anliegen.

Aus einer in "Patents Abstracts of Japan", Band 6, Nr. 212, 26. Oktober 1982 erschienen Zusammenfassung der JP-A-57 118 212 ist ein Verfahren zur Herstellung eines optischen Sendermoduls bekannt, bei welchem zunächst ein Lichtwellenleiter und eine Koppeloptik in einem Gehäuse fixiert werden. Andererseits wird eine Halbleiterdiode in einem ringförmigen Halter befestigt. Das Gehäuse und der Halter werden dann in Achsrichtung des Lichtwellenleiters und in zwei dazu senkrechten Richtungen relativ zueinander derart verschoben, bis die gewünschte Justierposition mit einem Optimum der Lichtübertragung erreicht ist. Ein axial verschiebbar auf einem Fortsatz des Gehäuses angeordneter Schweißring wird dann bis zur Anlage an den Halter verschoben und zur Fixierung der Justierposition sowohl mit dem Halter als auch mit dem Gehäuse verschweißt. Die beiden jeweils über den gesamten Umfang verlaufenden Schweißnähte werden dabei mittels Laserstrahlschweißen hergestellt.

Beim Verbinden von Elementen der optischen Nachrichtentechnik miteinander oder mit Elementen von lösbaren Steckverbindungen hat die Fixierung einer eingestellten Justierposition durch Laserstrahlschweißen den Vorteil, daß die Wäremebelastung der zu verbindenden Teile gering ist und daß die Fixierung zeitstabil und klimabeständig ist. Andererseits tritt jedoch beim Schweißvorgang ein Schweißverzug auf, durch welchen eine Fixierung mit Maßgenauigkeiten im Submikrometerbereich verhindert wird.

Der Erfindung liegt die Aufgabe zugrunde, eine Vorrichtung zum Verbinden von Elementen der optischen Nachrichtentechnik miteinander oder mit Elementen von lösbaren Steckverbindungen zu schaffen, bei welcher die zu verbindenden Elemente mit Maßgenauigkeiten im Submikrometerbereich relativ zueinander justiert und in der erreichten Justierposition dauerhaft, d.h. zeitstabil und klimabeständig durch Laserstrahlschweißen oder Elektronenstrahlschweißen fixiert werden, wobei ein räumlicher Schweißverzug von weniger als 0,2 μm gewährleistet sein soll. Dabei soll die Vorrichtung insbesondere bei der Herstellung von optischen Sendermodulen und bei der Herstellung von Steckerteilen für lösbare Steckverbindungen von Lichtwellenleitern eingesetzt werden können.

Diese Aufgabe wird bei einer gattungsgemäßen Vorrichtung durch die kennzeichnenden Merkmale des Anspruchs 1 gelöst.

Die zu fixierenden bzw. miteinander zu verbindenden Elemente wie Laserdiode und Koppeloptik oder Lichtleitfaser und Steckzylinder werden also zunächst an schweißbaren Justierkörpern befestigt, welche nach Erreichen einer gewollten Justierposition durch mindestens einen Schweißpunkt miteinander verbunden werden. Der Schweißpunkte wird dabei mittels Laserstrahl oder Elektronenstrahl gesetzt, so daß nur äußerst kleine Bereiche der Justierkörper kurzzeitig erwärmt werden und dementsprechend auch der Wärmeverzug äußerst gering ist. Da die Koppelflächen der Justierkörper spielfrei aneinanderliegen, können die Justierkörper ähnlich wie beim Stapeln von Endmaßen in eine exakte Justierposition gebracht werden und in dieser Position fixiert werden. Um einen räumlichen Schweißverzug von weniger als 0,2 μm zu gewährleisten und entsprechend hohe Fixiergenauigkeiten realisieren zu können ist es von entscheidender Bedeutung, daß zumindest der erste Schweißpunkt derart gesetzt wird, daß zwischen der Aufschmelzzone und einem die Koppelflächenkontor umschreibenden Kreis ein Abstand verbleibt. Der Schweißpunkt wird also so gesetzt, daß die Aufschmelzzone den die Koppelflächenkontur umschreibenden Kreis nicht berührt oder tangiert. Dieser Maßnahme liegt die Erkenntnis zugrunde, daß selbst bei einer Feinstbearbeitung der Koppelflächen die Teilefuge im Peripheriebereich etwas auseinanderklaffen kann und ein an dieser auseinanderklaffenden Stelle gesetzter Schweißpunkt beim Abkühlen der Aufschmelzzone zu einem Schweißverzug führen könnte. Wird zumindest der erste zu setzende Schweißpunkt aus diesem peripheren Gefahrenbereich herausverlegt, so bleibt die Teilefuge stabil und ein störender Schweißverzug kann zumindest weitgehend vermieden werden.

Gemäß einer besonders bevorzugten Ausgestaltung des erfindungsgemäßen Verfahrens ist vorgesehen, daß zumindest die beiden ersten Schweißpunkte derart gesetzt werden, daß zwischen der Aufschmelzzone und einem die Koppelflächenkontur umschreibenden Kreis ein Abstand verbleibt. Hierdurch wird die Gefahr eines Schweißverzuges durch ggf. erforderliche weitere Schweißpunkte oder Schweißnähte noch weiter reduziert.

Dieser Effekt kann noch gesteigert werden, wenn zumindest die beiden ersten Schweißpunkte im Abstand zu Eckpunkten der Koppelflächenkontur gesetzt werden. Dementsprechend werden die Schweißpunkte vorzugsweise in ebene Bereiche der Koppelflächenkontur gesetzt.

Bei dem erfindungsgemäßen Verfahren können Justierkörper mit planen Koppelflächen verwendet werden. Besonders vorteilhaft ist es jedoch, wenn Justierkörper verwendet werden, bei welchen mindestens eine Koppelfläche eine konkave Form aufweist. Hierdurch wird die Gefahr eines Schweißverzugs noch weiter verringert, da die Koppelflächen beim Abkühlen der Aufschmelzzonen ohne Lageveränderung aneinandergedrückt werden. Die andere Koppelfläche kann dabei eine plane Oberfläche aufweisen. Die andere Koppelfläche kann dann aber auch eine konvexe Oberfläche aufweisen, wobei die konkave Oberfläche aber stärker gekrümmt sein muß als die konvexe Oberfläche. Außerdem werden die Krümmungsradien der Koppelflächen größer bemessen als der Durchmesser des die Koppelfläche umschreibenden Kreises, wobei der Unterschied mehrere Größenordnungen beträgt. Diese Bemessung bedeutet, daß die maximale Breite der Teilefuge äußerst gering ist und beispielsweise etwa 2 μm beträgt.

Gemäß einer besonders bevorzugten Ausgestaltung des erfindungsgemäßen Verfahrens werden Justierkörper verwendet, deren Koppelflächenkonturen zumindest im Bereich der beiden ersten Schweißpunkte verschiedene, insbesondere gegensinnige Neigungen aufweisen. Bei einer derartigen Gestaltung der Koppelflächenkonturen wird vermieden, daß durch den Justiervorgang bedingte Verschiebungen zu Schweißstufen führen.

Weiterhin können die beim Justieren erreichten Maßgenauigkeiten noch weiter gesteigert werden, wenn die Justierkörper mit einer senkrecht zu den Koppelflächen wirkenden Kraft aneinandergedrückt werden. Die Justierkörper werden dann zweckmäßigerweise bis zum Erreichen der Justierposition in kleinen Teilschritten von höchstens 0,01 μm relativ zueinander verschoben.

Im folgenden werden Ausführungsbeispiele der Erfindung anhand der Zeichnung näher erläutert.

Es zeigen:

Figur 1 bis Figur 5 jeweils zwei verschiedene Ansichten von Justierkörpern, deren Koppelflächenprofile ein Anbringen von Schweißpunkten aus einer einzigen Schweißstrahlrichtung ermöglichen,

Figur 6 bis Figur 9 jeweils zwei verschiedene Ansichten von Justierkörpern, deren Koppelflächenprofile für Verbindungsschweißungen mit beliebigen Schweißrichtungen vorgesehen sind,

Figur 10 zwei verschiedene Ansichten von Justierkörpern, deren Koppelflächenprofile so ausgestaltet sind, daß Schweißstufen vermieden werden,

Figur 11 die Verbindung zweier Justierkörper, die mit planen Koppelflächen aneinanderliegen,

Figur 12 die Verbindung zweier Justierkörper, bei welcher eine Koppelfläche plan ist und die andere Koppelfläche eine konkave Form aufweist,

Figur 13 die Verbindung zweier Justierkörper, bei welcher beide Koppelflächen eine konkave Form aufweisen,

Figur 14 die Verbindung zweier Justierkörper, bei welcher eine Koppelfläche eine konvexe und die andere Koppelfläche eine konkave Form aufweist,

Figuren 15 und 16 einen optischen Sendermodul in auseinandergezogener Darstellung bzw. im zusammengebauten Zustand und die Figur 17 zwei verschiedene Ansichten von Justierkörpern, deren Koppelflächenprofile so ausgestaltet sind, daß die Verbindung mit Hilfe eines einzigen Schweißpunktes vorgenommen werden kann.

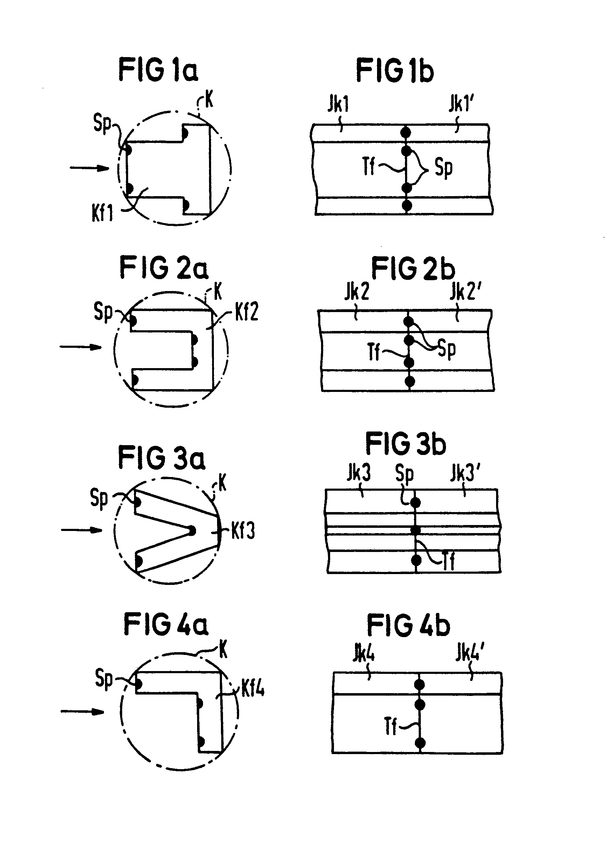

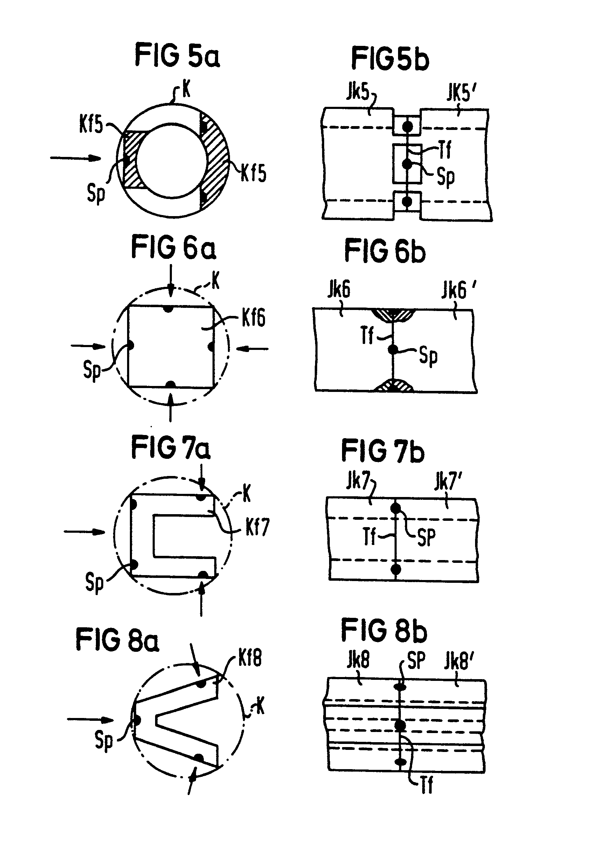

Zum Verbinden von Elementen der optischen Nachrichtentechnik miteinander oder mit Elementen von lösbaren Steckverbindungen von Lichtwellenleitern werden die zu verbindenden Elemente zunächst an schweißbaren Justierkörpern befestigt, worauf die Justierkörper mit spielfrei aneinanderliegenden Koppelflächen bis zum Erreichen einer erwünschten Justierposition relativ zueinander verschoben werden. Um diese Justierposition bleibend zu fixieren, werden dann die Justierkörper im Bereich der durch die Koppelflächen gebildeten Teilefuge mittels Laserstrahlschweißen durch Schweißpunkte miteinander verbunden. Die Schweißpunkte könnten aber auch durch Elektronenstrahlschweißen hergestellt werden, wobei die Verbindung dann aber im Vakuum vorgenommen werden müßte. Da sowohl beim Laserstrahlschweißen als auch beim Elektronenstrahlschweißen nur kleine Bereiche der Justierkörper kurzzeitig erwärmt werden, ist auch der Wärmeverzug sehr gering. Zur Erzielung einer verzugsfreien Schweißpunktfixierung werden aber auch an die Gestaltung der Justierkörper und insbesondere an die Lage der Schweißpunkte relativ zum jeweiligen Koppelflächenprofil gewisse Anforderungen gestellt. Die Figuren 1 bis 9 zeigen Ausführungsbeispiele für geeignete Koppelflächenprofile, wobei die Teilefuge jeweils mit Tf, die Schweißpunkte jeweils mit Sp und die die Koppelflächenkonturen umschreibenden Kreise jeweils mit K bezeichnet sind. Es ist zu erkennen, daß sämtliche Schweißpunkte Sp derart gesetzt sind, daß zwischen der Aufschmelzzone und dem die Koppelflächenkontur umschreibenden Kreis K immer ein gewisser Abstand verbleibt. Die Aufschmelzzonen der Schweißpunkte Sp berühren also in keinem Fall den Kreis K. Die Lage der Schweißpunkte Sp richtet sich ferner auch nach einer vorhandenen Symmetrie der Koppelflächenkonturen. In den Figuren 1 bis 9 sind die Schweißstrahlrichtungen beim Anbringen der Schweißpunkte Sp durch nicht näher bezeichnete Pfeile aufgezeigt. Es ist zu erkennen, daß bei den Ausführungsbeispielen nach den Figuren 1 bis 5 sämtliche Schweißpunkte aus einer einzigen Schweißstrahlrichtung gesetzt werden können, während bei den Ausführungsbeispielen nach den Figuren 6 bis 9 beliebige Schweißstrahlrichtungen vorgesehen sind.

Die Figuren 1a und 1b zeigen Justierkörper Jk1 und Jk1', deren Koppelflächen Kf1 jeweils T-förmig ausgebildet sind. Die Verbindung der beiden Justierkörper Jk1 und Jk1' erfolgt durch insgesamt vier im Bereich der Teilefuge Tf gesetzte Schweißpunkte Sp. Zwei Schweißpunkte Sp befinden sich an der Unterseite des T-förmigen Überstandes, während die beiden anderen Schweißpunkte Sp im Bereich der Grundfläche des T-Profils liegen.

Die Figuren 2a und 2b zeigen Justierkörper Jk2 und Jk2', deren Koppelflächen Kf2 jeweils U-förmig ausgebildet sind. Die Verbindung der beiden Justierkörper Jk2 und Jk2' erfolgt durch insgesamt vier im Bereich der Teilefuge Tf gesetzte Schweißpunkte Sp. An jeder Stirnseite der Schenkel des U-Profils befindet sich ein Schweißpunkt Sp, während die beiden anderen Schweißpunkte Sp im Bereich des Nutgrundes des U-Profils liegen.

Die Figuren 3a und 3b zeigen Justierkörper Jk3 und Jk3', deren Koppelflächen Kf3 jeweils V-förmig ausgebildet sind. Die Verbindung der beiden Justierkörper Jk3 und Jk3' erfolgt durch insgesamt drei im Bereich der Teilefuge Tf gesetzte Schweißpunkte Sp. An jeder Stirnseite der Schenkel des V-Profils befindet sich ein Schweißpunkt Sp, während der dritte Schweißpunkt Sp in der Grundfläche des Einschnitts des V-Profils liegt.

Die Figuren 4a und 4b zeigen Justierkörper Jk4 und Jk4', deren Koppelflächen Kf4 jeweils L-förmig ausgebildet sind. Die Verbindung der beiden Justierkörper Jk4 und Jk4' erfolgt durch insgesamt drei im Bereich der Teilefuge Tf gesetzte Schweißpunkte Sp. An der Stirnseite eines Schenkels des L-Profils befindet sich ein Schweißpunkt Sp, während die beiden anderen Schweißpunkte Sp an der Innenfläche des anderen Schenkels liegen.

Die Figuren 5a und 5b zeigen Justierkörper Jk5 und Jk5', deren Koppelflächen Kf5 jeweils aus einem kreisringförmigen Querschnitt herausgearbeitet sind. Die Verbindung der beiden Justierkörper Jk5 und Jk5' erfolgt durch insgesamt drei im Bereich der Teilefuge Tf gesetzte Schweißpunkte Sp. An jeder Stirnseite eines flachen Ringabschnittes befindet sich ein Schweißpunkt Sp, während der dritte Schweißpunkt Sp in der Mitte einer Abflachung liegt. Die aus zwei jeweils durch eine Schraffur hervorgehobenen Flächenbereichen bestehende Koppelfläche Kf4 wurde aus dem kreisringförmigen Querschnitt derart herausgearbeitet, daß zwischen den Aufschmelzzonen der Schweißpunkte Sp und dem umschreibenden Kreis K jeweils ein Abstand verbleibt.

Die Figuren 6a und 6b zeigen Justierkörper Jk6 und Jk6', eren Koppelflächen Kf6 jeweils quadratisch ausgebildet sind. Die Verbindung der beiden Justierkörper Jk6 und Jk6' erfolgt durch insgesamt vier im Bereich der Teilefuge Tf gesetzte Schweißpunkte Sp. Dabei befindet sich in der Mitte jeder Seite des quadratischen Profils jeweils ein Schweißpunkt Sp.

Die Figuren 7a und 7b zeigen Justierkörper Jk7 und Jk7', deren Koppelflächen Kf7 jeweils U-förmig ausgebildet sind. Die Verbindung der beiden Justierkörper Jk7 und Jk7' erfolgt durch insgesamt vier im Bereich der Teilefuge Tf gesetzte Schweißpunkte Sp. An jeder Seitenfläche der Schenkel des U-Profils befindet sich ein Schweißpunkt Sp, während die beiden anderen Schweißpunkte Sp im Bereich der äußeren Grundfläche des U-Profils liegen.

Die Figuren 8a und 8b zeigen Justierkörper Jk8 und Jk8', deren Koppelflächen Kf8 jeweils V-förmig ausgebildet sind. Die Verbindung der beiden Justierkörper Jk8 und Jk8' erfolgt durch insgesamt vier im Bereich der Teilefuge Tf gesetzte Schweißpunkte Sp. An jeder Seitenfläche der Schenkel des V-Profils befindet sich ein Schweißpunkt Sp, während der dritte Schweißpunkt Sp im Bereich der äußeren Grundfläche des V-Profils liegt.

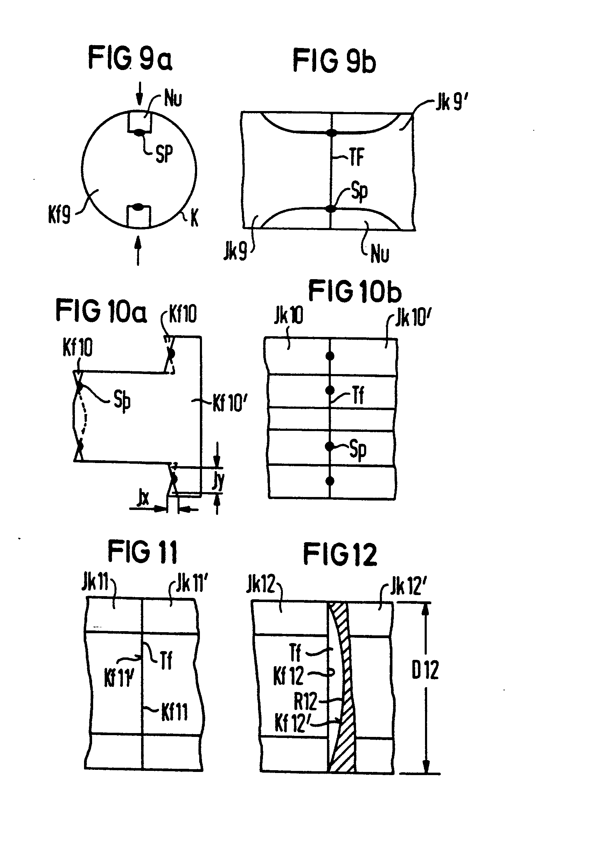

Die Figuren 9a und 9b zeigen Justierkörper Jk9 und Jk9′, deren Koppelflächen Kf9 jeweils kreisförmig ausgebildet sind, wobei der die Koppelflächen Kf9 umschreibende Kreis K durch den Außenumfang gebildet ist. Auf einander gegenüberliegenden Seiten sind in die Justierkörper Jk9 und Jk9′ in Längsrichtung verlaufende, U-förmige Nuten Nu eingebracht. Die Verbindung der beiden Justierkörper Jk9 und Jk9′ erfolgt durch insgesamt zwei im Bereich der Teilefuge Tf gesetzte Schweißpunkte Sp. An jeder Nutgrundfläche der Nuten Nu befindet sich dabei jeweils ein Schweißpunkt Sp.

Die Figuren 10a und 10b zeigen Justierkörper Jk10 und Jk10′, deren Koppelflächen Kf10 und Kf10′ so ausgestaltet sind, daß durch den Justiervorgang bedingte Verschiebungen nicht zu Schweißstufen führen können. Dabei sind die in der Grundform T-förmigen Profile der Koppelflächen Kf10 und Kf10′ so abgewandelt, daß an der Unterseite des T-förmigen Überstandes und an zwei Stellen im Bereich der Grundfläche des T-Profils jeweils gegensinnige Neigungen vorhanden sind. Die insgesamt vier im Bereich der Teilefuge Tf vorgesehenen Schweißpunkte Sp können dann auch nach einer Verschiebung im Bereich der Justierwege Jx und Jy jeweils in den Kreuzungspunkt der gegensinnigen Neigungen gesetzt werden, d.h. es treten keine Schweißstufen auf.

Die Koppelflächen der Justierkörper müssen beim Justiervorgang spielfrei aneinanderliegen. Dies kann gemäß Figur 11 beispielsweise dadurch erreicht werden, daß zwei miteinander zu verbindende Justierkörper Jk11 und Jk11′ mit planen Koppelflächen Kf11 bzw. Kf11′ aneinanderliegen. Die Koppelflächen Kf11 und Kf11′ sollten dabei so fein bearbeitet sein, daß im peripheren Bereich der Teilefuge Tf möglichst keine Spalten auftreten. Für ein absolut spielfreies Anliegen der Koppelflächen ist es jedoch günstiger, wenn mindestens eine Koppelfläche eine konkave Form aufweist.

Gemäß Figur 12 sind Paarungen möglich, bei welchen der eine Justierkörper Jk12 eine plane Koppelfläche Kf12 aufweist, während der andere Justierkörper Jk12′ eine konkav gewölbte Koppelfläche Kf12′ aufweist. Die Justierkörper Jk12 und Jk12′ liegen dann nur im Peripheriebereich der Koppelflächen Kf12 und Kf12′ aneinander an. Ist mit R12 der Radius der konkaven Wölbung und mit D12 der Durchmesser des die Koppelflächen Kf12 und Kf12′ umschreibenden Kreises bezeichnet, so muß D12 << R12 sein. Dies bedeutet, daß die maximale Breite der Teilefuge Tf äußerst gering ist und in Wirklichkeit beispielsweise nur etwa 2 μm beträgt.

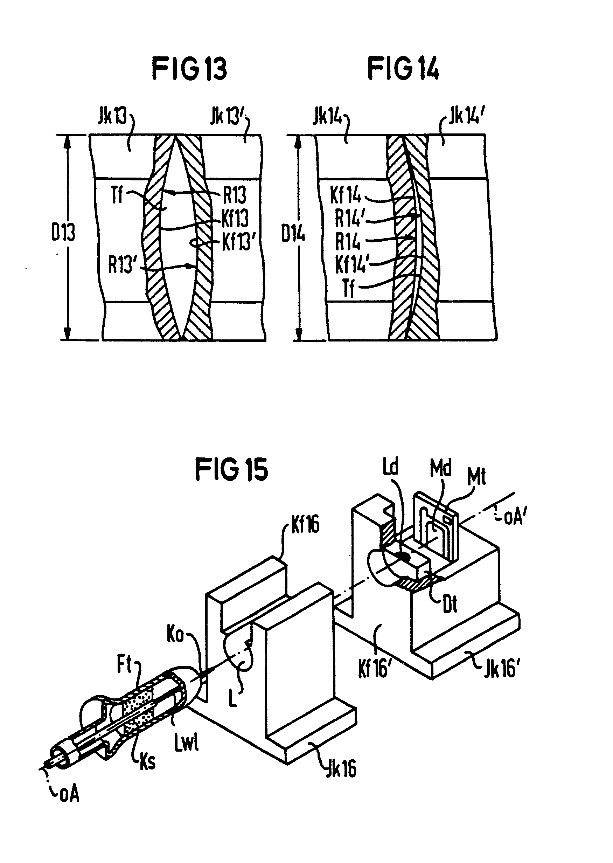

Gemäß Figur 13 sind auch Paarungen möglich, bei welchen zwei Justierkörper Jk13 und Jk13′ jeweils konkav gewölbte Koppelflächen Kf13 bzw. Kf13′ aufweisen. Die Justierkörper Jk13 und Jk13′ liegen dann ebenfalls nur im Peripheriebereich der Koppelflächen Kf13 und Kf13′ aneinander an. Ist mit R13 der Radius der konkaven Wölbung der Koppelfläche Kf13, mit R13′ der Radius der konkaven Wölbung der Koppelfläche Kf13′ und mit D13 der Durchmesser des die Koppelflächen Kf13 und Kf13′ umschreibenden Kreises bezeichnet, so muß D13 << R13 und D13 << R13′ sein. Dies bedeutet, daß die maximale Breite der Teilefuge Tf auch hier äußerst gering ist und beispielsweise nur etwa 2 μm beträgt.

Gemäß Figur 14 sind auch Paarungen möglich, bei welchen der eine Justierkörper Jk14 eine konvexe Koppelfläche Kf14 aufweist, während der andere Justierkörper Jk14′ eine konkav gewölbte Koppelfläche Kf14′ aufweist. Ist mit R14 der Radius der konvexen Wölbung der Koppelfläche Kf14, mit R14′ der Radius der konkaven Wölbung der Koppelfläche Kf14′ und mit D14 der Durchmesser des die Koppelflächen Kf14 und Kf14′ umschreibenden Kreises bezeichnet, so muß R14′ < R14, D14 << R14 und D14 << R14′ sein. Dies bedeutet, daß auch hier die Justierkörper Jk14 und Jk14′ nur im Peripheriebereich der Koppelflächen Kf14 und Kf14′ aneinander anliegen und daß die maximale Breite der Teilefuge Tf auch hier äußerst gering ist und in Wirklichkeit beispielsweise nur etwa 2 μm beträgt.

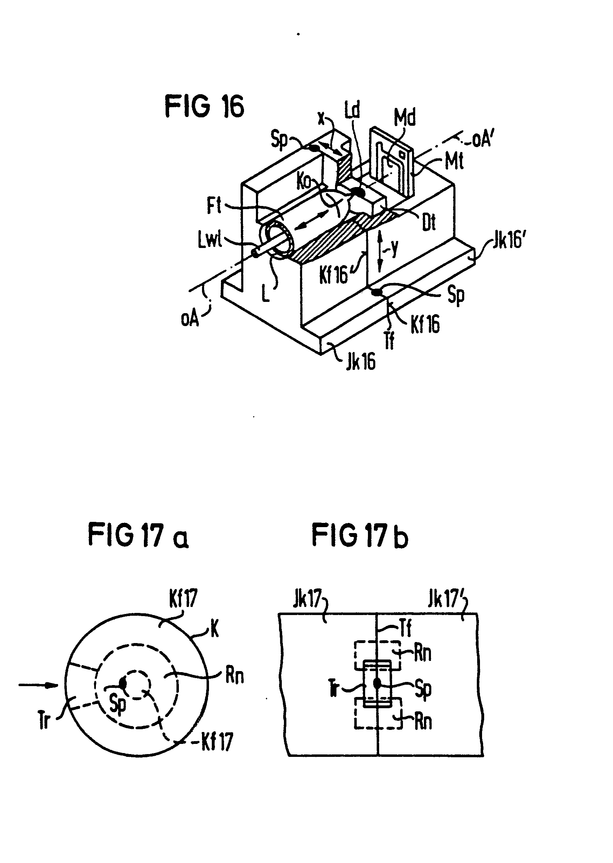

Die Figuren 15 und 16 zeigen in stark vereinfachter schematischer Darstellung die Herstellung eines optischen Sendermoduls. In der auseinandergezogenen Darstellung der Figur 19 ist zu erkennen, daß in einen rohrförmigen Faserträger Ft ein Lichtwellenleiter Lw1 und eine Koppeloptik Ko fixiert sind. Die Fixierung des im vorderen Bereich von seiner Ummantelung befreiten Lichtwellenleiters Lw1 erfolgt dabei durch Einkleben der Ummantelung, wobei die Klebeschicht mit Ks bezeichnet ist. Als Koppeloptik Ko ist an dem vorderen Ende des Lichtwellenleiters Lw1 ein Taper angeformt, dessen zu einer kleinen Linse abgerundete Spitze nur kurz aus dem rohrförmigen Faserträger Ft herausragt. Kurz vor dem Taper ist der Lichtwellenleiter Lw1 in einer zentrischen Bohrung des Faserträgers Ft ebenfalls durch Kleben oder auch durch Löten oder durch Einglasung fixiert.

Als zweites Teil ist in der auseinandergezogenen Darstellung der Figure 15 in erster Justierkörper Jk16 zu erkennen, welcher einen T-förmigen Querschnitt besitzt. Außerdem ist in den ersten Justierkörper Jk16 eine Längsführung L für den rohrförmigen Faserträger Ft eingebracht, wobei diese Längsführung L ein abgestuftes U-Profil aufweist. Eine der Stirnseiten des Justierkörpers Jk16 ist beispielsweise durch Läppen so fein bearbeitet, daß sie als Koppelfläche Kf16 dienen kann. Die Kontur und Form der Koppelfläche Kf16 entspricht dabei im wesentlichen der Kontur und Form der in Figur 1a dargestellten Koppelfläche Kf1.

Als drittes Teil ist in der auseinandergezogenen Darstellung der Figur 15 schließlich ein zweiter Justierkörper Jk16' zu erkennen, welcher im vorderen Bereich ebenfalls einen T-förmigen Querschnitt aufweist und eine der Koppelfläche Kf16 zugeordnete Koppelfläche Kf16' besitzt. Auf dem zweiten Justierkörper Jk16' ist ein gleichzeitig als Wärmesenke dienender Diodenträger Dt befestigt, welcher eine mit Ld bezeichnete Laserdiode trägt. Der beispielsweise durch Laserstrahlschweißen auf dem zweiten Justierkörper Jk16 befestigte Diodenträger Dt ist dabei so einjustiert, daß die optische Achse oA' der Laserdiode Ld normal zur Koppelfläche Kf16' ausgerichtet ist. Auf dem zweiten Justierkörper Jk16' ist ferner ein Monitordiodenträger Mt durch Löten oder Kleben befestigt, welcher eine mit Md bezeichnete Monitordiode trägt.

Zur Herstellung des in Figur 16 im zusammengebauten Zustand dargestellten optischen Sendermoduls sind folgende Schritte erforderlich:

1. Aufspannen des ersten Justierkörpers Jk16 auf eine Tischplatte oder einen ebenen Träger.

2. Aufnahme des zweiten Justierkörpers Jk16' in einem Greifer und Aneinanderdrücken der Koppelflächen Kf16 und Kf16' mit geringer Kraft.

3. Einführen des rohrförmigen Faserträgers Ft in die Längsführung L des ersten Justierkörpers Jk16 und Abstand zwischen Koppeloptik Ko und Laserdiode Ld justieren, wobei die optische Achse oA der Koppeloptik Ko normal zur Koppelfläche Kf16 ausgerichtet ist.

4. Laserdiode Ld in bezug auf Koppeloptik Ko durch Verschieben des zweiten Justierkörpers Jk' in der horizontalen x-Richtung und der vertikalen y-Richtung vorjustieren.

5. Befestigung des rohrförmigen Faserträgers Ft im ersten Justierkörper Jk16 mittels Laserstrahlschweißen.

6. Laserdiode Ld in bezug auf Koppeloptik Ko durch Verschieben des zweiten Justierkörpers Jk16' in der horizontalen x-Richtung und der vertikalen y-Richtung endgültig justieren.

7. Verbindung der beiden Justierkörper Jk16 und Jk16' mittels Laserstrahlschweißen durch insgesamt vier im Bereiche der Teilefuge Tf gesetzte Schweißpunkte Sp.

Für die Formgebung der Koppelflächen Kf16 und Kf16' sowie der Koppelflächenkonturen und für die Lage der Schweißpunkte Sp gelten dabei die im Zusammenhang mit den Figuren Ia, Ib und 11 bis 14 gemachten Aussagen.

Der in Figur 16 dargestellte optische Sendermodul kann nachträglich in ein Gehäuse eingesetzt werden oder bereits in einem Gehäuse zusammengesetzt werden. Für den Abstand zwischen Koppeloptik Ko und Laserdiode Ld genügten Justier- und Fixiergenauigkeiten von etwa 2 µm. Für die x- und y- Richtung konnten Justier- und Fixiergenauigkeiten von etwa + 0,1 µm erzielt werden.

Die Figuren 17a und 17b zeigen zwei verschiedene Ansichten von Justierkörpern Jk17 und Jk17', deren Koppelflächen Kf17 so ausgebildet sind, daß die Verbindung mit Hilfe eines einzigen Schweißpunktes Sp vorgenommen werden kann. Hierzu wurde in die kreisförmigen Koppelflächen Kf17 jeweils eine Ringnut Rn und ein schlitzförmiger Trichter Tr eingefräst. Der die Koppelflächen Kf17 umschreibende Kreis K ist durch den Außenumfang gebildet. Die Verbindung der beiden Justierkörper Jk17 und Jk17' erfolgt ausschließlich durch den Schweißpunkt Sp, welcher mittels Laserstrahlschweißen durch den Trichter Tr und die Ringnut Rn hindurch gesetzt wird, wobei die Schweißstrahlrichtung in Figur 17a durch einen nicht näher bezeichneten Pfeil aufgezeigt ist. Der im Bereich der Teilefuge Tf gesetzte Schweißpunkt Sp befindet sich dabei am Innenumfang der Ringnut Rn bzw. am Außenumfang des kreisförmigen Zentrumsbereichs der Koppelfläche Kf17.

## Patentansprüche

1. Vorrichtung zum Verbinden von Elementen der optischen Nachrichtentechnik miteinander oder mit Elementen von lösbaren Steckverbindungen, bei welcher die zu verbindenden Elemente (Ld) an zugeordneten schweißbaren Justierkörpern befestigt, die Justierkörper mit spielfrei aneinanderliegenden Koppelflächen angeordnet und im Bereich der durch die Koppelflächen gebildeten Teilefuge durch Laserstrahlschweißen oder Elektronenstrahlschweißen miteinander verbunden sind, dadurch gekennzeichnet, daß die Justierkörper (Jk16, Jk16') ein nichtrundes Profil aufweisen, und daß der bzw. die Schweißpunkte so gesetzt sind, daß zwischen dem bzw. den Schweißpunkten und einem das Koppelflächenprofil umschreibenden Kreis (K) ein Abstand verbleibt.

2. Vorrichtung nach Anspruch 1, dadurch gekennzeichnet, daß die Justierkörper (Jk11, Jk11') plane Koppelflächen (Kf11, Kf11') aufweisen.

3. Vorrichtung nach Anspruch 1, dadurch gekennzeichnet, daß mindestens einer der Justierkörper (Jk12, Jk12'; Jk13, Jk13', Jk14, Jk14') eine Koppelfläche (Kf12'; Kf13, Kf13'; Kf14') mit konkaver Form aufweist.

4. Vorrichtung nach Anspruch 3, dadurch gekennzeichnet, daß der andere Justierkörper (Jk12, Jk12') eine Koppelfläche (Kf12) mit planer Oberfläche aufweist.

5. Vorrichtung nach Anspruch 3, dadurch gekennzeichnet, daß der andere Justierkörper (Jk14, Jk14') eine Koppelfläche (Kf14) mit konvexer Dberfläche aufweist, wobei die konkave Oberfläche stärker gekrümmt ist als die konvexe Oberfläche.

6. Vorrichtung nach einem der Ansprüche 3 bis 5, dadurch gekennzeichnet, daß die Krümmungsradien (R12; R13, R13'; R14, R14') der Koppelflächen (Kf12, Kf12'; Kf13, Kf13'; Kf14, Kf14') größer bemessen sind als der Durchmesser (D12; D13; D14) des die Koppelflächen (Kf12, Kf12'; Kf13, Kf13'; Kf14, Kf14') umschreibenden Kreises, wobei der Unterschied mehrere Größenordnungen beträgt.

EP 0 181 532 B1

7. Vorrichtung nach einem der vorhergehenden Ansprüche, dadurch gekennzeichnet, daß die Koppelflächenkonturen der Justierkörper (Jk10, Jk10') zumindest im Bereich der beiden ersten Schweißpunkte (Sp) verschiedene Neigungen aufweisen.

8. Vorrichtung nach Anspruch 7, dadurch gekennzeichnet, daß die Koppelflächenkonturen der Justierkörper (Jk10, Jk10') zumindest im Bereich der beiden ersten Schweißpunkte (Sp) gegensinnige Neigungen aufweisen.

9. Verfahren zur Herstellung einer Vorrichtung nach Anspruch 1, dadurch gekennzeichnet, daß zumindest die beiden ersten Schweißpunkte (Sp) derart gesetzt werden, daß zwischen der Aufschmelzzone und einem die Koppelflächenkontur umschreibenden Kreis (K) ein Abstand verbleibt.

10. Verfahren nach Anspruch 9, dadurch gekennzeichnet, daß zumindest die beiden ersten Schweißpunkte (Sp) im Abstand zu Eckpunkten der Koppelflächenkontur gesetzt werden.

11. Verfahren nach einem der vorhergehenden Ansprüche, dadurch gekennzeichnet, daß die Justierkörper (Jk1 bis Jk16, Jk1' bis Jk16') beim Schweißen mit einer senkrecht zu den Koppelflächen (Kf1 bis Kf16, Kf1' bis Kf16') wirkenden Kraft aneinandergedrückt werden.

12. Verfahren nach einem der vorhergehenden Ansprüche, dadurch gekennzeichnet, daß die Justierkörper (Jk1 bis Jk16, Jk1' bis Jk16') bis zum Erreichen der Justierposition in kleinen Teilschritten von höchstens 0,01 µm relativ zueinander verschoben werden.

**Revendications**

1. Dispositif pour raccorder des éléments de la technique optique de transmission d'informations, entre eux ou à des éléments de connecteurs à enfichage détachables, et dans lequel les éléments (Ld) devant être raccordés sont fixés à des corps d'ajustement associés soudables, lesquels corps d'ajustement sont disposés de telle sorte que leurs surfaces de couplage sont appliquées l'une contre l'autre sans jeu, et sont reliés entre eux, dans la zone du joint de séparation formé par les surfaces de couplage, par soudage au moyen d'un faisceau laser ou par soudage au moyen d'un faisceau d'électrons, caractérisé par le fait que les corps d'ajustement (Jk16, Jk16') possèdent un profil non circulaire et que le ou les points de soudure sont positionnés de telle sorte qu'il subsiste un écart entre le ou les points de soudure et un cercle (K) circonscrit au profil de la surface de couplage.

2. Dispositif suivant la revendication 1, caractérisé par le fait que les corps d'ajustement (Jk11, Jk11') possèdent des surfaces planes de couplage (Kf11, Kf11').

3. Dispositif suivant la revendication 1, caractérisé par le fait qu'au moins l'un des corps d'ajustement (Jk12, Jk12'; Jk13, Jk13', Jk14, Jk14') possède une surface de couplage (Kf12'; Kf13, Kf13'; Kf14') de forme concave.

4. Dispositif suivant la revendication 3, caractérisé par le fait que l'autre corps d'ajustement (Jk12, Jk12') possède une surface de couplage (Kf12) plane.

5. Dispositif suivant la revendication 3, caractérisé par le fait que l'autre corps d'ajustement (Jk14, Jk14') possède une surface de couplage (Kf14) convexe, la surface concave étant plus fortement cintrée que la surface convexe.

6. Dispositif suivant l'une des revendications 3 à 5, caractérisé par le fait que les rayons de courbure (R12; R13; R13'; R14, R14') des surfaces de couplage (Kf12, Kf12'; Kf13, Kf13'; Kf14, Kf14') sont choisis supérieurs au diamètre (D12; D13; D14) du cercle circonscrit aux surfaces de couplage (Kf12, Kf12'; Kf13, Kf13'; Kf14, Kf14'), la différence étant égale à plusieurs ordres de grandeur.

7. Dispositif suivant l'une des revendications précédentes, caractérisé par le fait que les contours des surfaces de couplage des corps d'ajustement (Jk10, Jk10') possèdent des inclinaisons différentes au moins dans la zone des deux premiers points de soudure (Sp).

8. Dispositif suivant la revendication 7, caractérisé par le fait que les contours des surfaces de couplage des corps d'ajustement (Jk10, Jk10') possèdent des inclinaisons de sens opposés au moins dans la zone des deux premiers points de soudure (Sp).

9. Procédé pour fabriquer un dispositif suivant la revendication 1, caractérisé par le fait qu'on positionne au moins les deux premiers points de soudure (Sp) de manière qu'il subsiste un écart entre la zone de fusion et un cercle (K) circonscrit au contour de la surface de couplage.

10. Procédé suivant la revendication 9, caractérisé par le fait qu'on positionne au moins les deux premiers points de soudure (Sp) à distance des angles du contour de la surface de couplage.

11. Procédé suivant l'une des revendications précédentes, caractérisé par le fait qu'on repousse l'un contre l'autre les corps d'ajustement (Jk1 à Jk16, Jk1' à Jk16'), lors du soudage, avec une force agissant perpendiculairement aux surfaces de couplage (Kf1 à Kf16, Kf1' à Kf16').

12. Procédé suivant l'une des revendications précédentes, caractérisé par le fait qu'on déplace l'un par rapport à l'autre les corps d'ajustement (Jk1 à Jk16, Jk1' à Jk16') jusqu'à ce que la position d'ajustement soit atteinte, selon de petits pas partiels égaux au maximum à 0,01 µm.

**Claims**

1. Device for connecting elements of optical communications technology to one another or to elements of detachable connectors, in which device the elements (Ld) to be connected are attached to associated weldable adjustment members, the adjustment members are arranged with coupling faces resting against one another without play and are joined to one another by laser beam welding or electron beam welding in the area of the parts joint formed by the coupling faces, characterized in that the adjustment mem-

7

bers (Jk16, Jk16') exhibit a non-round contour and that the spot weld or spot welds are placed in such a manner that a distance remains between the spot weld or spot welds and a circle (K) circumscribing the coupling face contour.

2. Device according to Claim 1, characterized in that the adjustment members (Jk11, Jk11,) exhibit planar coupling faces (Kf11, Kf11').

3. Device according to Claim 1, characterized in that at least one of the adjustment members (Jk12, Jk12'; Jk13, Jk13', Jk14, Jk14') exhibits a coupling face (Kf12'; Kf13, Kf13'; Kf14') having a concave shape.

4. Device according to Claim 3, characterized in that the other adjustment member (Jk12, Jk12') exhibits a coupling face (Kf12) having a planar surface.

5. Device according to Claim 3, chararacterized in that the other adjustment member (Jk14, Jk14') exhibits a coupling face (Kf14) having a convex surface, the concave surface having a greater curvature than the convex surface.

6. Device according to one of Claims 3 to 5, characterized in that the radii of curvature (R12; R13, R13'; R14, R14') of the coupling faces (Kf12, Kf12'; Kf13, Kf13'; Kf14, Kf14') are dimensioned to be larger than the diameter (D12; D13; D14) of the circle circumscribing the coupling faces (Kf12, Kf12'; Kf13, Kf13'; Kf14, Kf14'), the difference being several orders of magnitude.

7. Device according to one of the preceding claims, characterized in that the coupling face contours of the adjustment members (Jk10, Jk10') exhibit different inclinations at least in the area of the first two spot welds (Sp).

8. Device according to Claim 7, characterized in that the coupling face contours of the adjustment members (Jk10, Jk10') exhibit oppositely directed inclinations in the area of the first two spot welds (Sp).

9. Method for producing a device according to Claim 1, characterized in that at least the first two spot welds (Sp) are placed in such a manner that a distance remains between the melting zone and a circle (K) circumscribing the couPling face contour.

10. Method according to Claim 9, characterized in that at least the first two spot welds (Sp) are placed at a distance from corner points of the coupling face contour.

11. Method according to one of the preceding claims, characterized in that the adjustment members (Jk1 to Jk16, Jk1' to Jk16') are pressed against one another with a force acting perpendicularly to the coupling faces (Kf1 to Kf16, Kf1' to Kf16') during the welding.

12. Method according to one of the preceding claims, characterized in that the adjustment members (Jk1 to Jk16, Jk1' to Jk16') are displaced relative to one another in small part-steps of 0.01 µm at a maximum until the adjustment position is reached.

FIG 1a

FIG 1b

FIG 2a

FIG 2b

FIG 3a

FIG 3b

FIG 4a

FIG 4b

# FIG 5a

# FIG5b

# FIG 6a

# FIG 6b

# FIG 7a

# FIG 7b

# FIG 8a

# FIG 8b

2

## FIG 9a

Nu
SP
Kf9
K

## FIG 9b

Jk 9'
TF
Sp
Jk 9
Nu

## FIG 10a

Kf10
Kf 10
Sp
Kf 10'
Jy
Jx

## FIG 10b

Jk 10
Jk 10'
Tf
Sp

## FIG 11

Jk 11
Jk 11'
Tf
Kf 11'
Kf 11

## FIG 12

Jk 12
Jk 12'
Tf
Kf 12
R12
Kf 12'
D 12

## FIG 13

Jk13  Jk13'

Tf  R13
Kf13
Kf13'

D13

R13'

## FIG 14

Jk14  Jk14'

Kf14
R14'
R14
Kf14'
Tf

D14

## FIG 15

Ld  Md  Mt

oA'

Kf16

Dt

Ko

Ft

L

Lwl

Ks

Kf16'  Jk16'

Jk16

oA

4

FIG 16

FIG 17 a

FIG 17 b